(19) Europäisches Patentamt

European Patent Office

Office européen des brevets

(11) Veröffentlichungsnummer: **0 307 569 B1**

# (12) EUROPÄISCHE PATENTSCHRIFT

(45) Veröffentlichungstag der Patentschrift: **15.04.92**

(21) Anmeldenummer: **88111103.3**

(22) Anmeldetag: **12.07.88**

(51) Int. Cl.⁵: **F16J 15/32**, F16J 10/02

---

(54) **Kolben-Zylinder-Aggregat.**

---

(30) Priorität: **17.09.87 DE 3731158**

(43) Veröffentlichungstag der Anmeldung:
**22.03.89 Patentblatt 89/12**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**EP-A- 0 264 682**   **DE-A- 2 315 016**
**DE-A- 2 320 736**   **DE-A- 2 947 516**
**DE-U- 8 519 534**   **FR-A- 2 379 971**
**US-A- 2 931 673**

(73) Patentinhaber: **Festo KG**
**Ruiter Strasse 82**
**W-7300 Esslingen 1(DE)**

(72) Erfinder: **Stoll, Kurt, Dipl.-Ing.**
**Lenzhalde 72**
**W-7300 Esslingen(DE)**

(74) Vertreter: **Magenbauer, Rudolf, Dipl.-Ing. et al**
**Patentanwälte Dipl.-Ing. Rudolf Magenbauer**
**Dipl.-Phys. Dr. Otto Reimold Dipl.-Phys. Dr.**
**Hans Vetter Hölderlinweg 58**
**W-7300 Esslingen(DE)**

## Beschreibung

Die Erfindung betrifft ein Kolben-Zylinder-Aggregat nach dem Oberbegriff des Anspruches 1.

Bei Kolben-Zylinder-Aggregaten dieser Art wird die Führung des Kolbens innerhalb des Zylinders allein von dem Führungsband übernommen, während der Kolben selbst keinen unmittelbaren Kontakt zum Zylinder hat. Auf diese Weise sind an die Oberflächenbeschaffenheit des Kolbens keine hohen Anforderungen gestellt, was die Herstellung vereinfacht und verbilligt. Zur Montage auf dem Kolben wird das Führungsband aufgespreizt, wozu es über eine z.B. schlitzartige Trennstelle verfügt, so daß es sich problemlos über den Kolben überstreifen läßt. Auf Grund der federelastischen Eigenschaften federt das Führungsband auf dem Kolben in seine ursprüngliche Gestalt zurück, wobei nach dem Einbau im Zylinder die Trennstelle geschlossen ist, indem die einander zugewandten Bandenden aufeinander zu gedrückt werden. In der DE-A-23 20 736 wird ein Kolben-Zylinder-Aggregat mit auf dem Kolben montiertem Führungsband im einzelnen beschrieben.

Um die aktuelle Position eines in einem Zylinder hin und her bewegten Kolbens zu erfassen, oder um bei ganz bestimmten Kolbenpositionen ein z.B. für die Ansteuerung eines Ventils oder einer sonstigen Einrichtung verwendbares Schaltsignal zu erzeugen, ist es beispielsweise aus der DE-B-29 47 516 bekannt, am Kolben einen Ring aus permanentmagnetischem Material anzubringen. Dieser Magnetring ist in der Lage, außen am Zylinder angeordnete Schalter oder Sensoren auf Grund seines Magnetfeldes berührungslos zu betätigen und somit ein Schaltsignal auszulösen, wenn er am Schalter bzw. Sensor vorbeibewegt wird. Beim Versuch der Übernahme dieses Detektionsprinzips auf ein Kolben-Zylinder-Aggregat gemäß DE-A-23 20 736 haben sich allerdings Nachteile gezeigt, die durch die vorliegende Erfindung ausgeräumt werden sollen.

Eine Montage des aus der DE-B-29 47 516 bekannten Magnetringes am Kolben der DE-A-23 20 736 würde dort eine axiale Zweiteilung des Kolbens erfordern, um den starren Magnetring überhaupt montieren zu können. Dies hätte einen nicht unbeachtlichen Aufwand für die Herstellung und Montage zur Folge, zumal der Kolben aus der DE-A-23 20 736 wegen der geschlitzten und federelastischen Ausbildung der Führungsbänder grundsätzlich eine einteilige Ausführung erlauben würde. Zwar könnte man erwägen, den Magnetring stirnseitig am einteiligen Kolben anzuordnen, was jedoch eine beträchtliche Vergrößerung der axialen Baulänge zur Folge hätte. Auch bestünde eine Beschädigungsgefahr für den Magnetring im Falle des Aufpralls des Kolbens an seinem Zylinderdek-kel bei Erreichen des Hubendes.

Es ist daher das Ziel der vorliegenden Erfindung, ein Kolben-Zylinder-Aggregat der eingangs genannten Art zu schaffen, das unter Beibehaltung der mit einem Führungsband verbundenen Vorteile auf kostengünstige Weise mit einem Dauermagneten bestückt ist, welcher bei einfacher Montage sicher gehalten ist und zugleich eine kompakte Bauweise der Kolbenanordnung sowie einen zuverlässigen Einsatz des Dauermagneten als Schaltmittel für Sensoren oder Schalter ermöglicht.

Dieses Ziel wird bei einem Kolben-Zylinder-Aggregat der eingangs genannten Art durch die zusätzliche Verwirklichung des kennzeichnenden Teils des Anspruches 1 erreicht.

Demgemäß hat man bei der Querschnittsform des Kolbens von der Kreisform Abkehr genommen und ist zu einer ovalen bzw. elliptischen Querschnittsform übergegangen, was es wegen der so erhaltenen Verdrehsicherung ermöglicht hat, auf eine ringförmige Ausgestaltung des Dauermagneten zu verzichten und statt dessen ein sehr klein bauendes Dauermagnetstück am Kolben anzuordnen. Dieses Dauermagnetstück läßt sich auch an einem einteiligen Kolben problemlos fixieren, indem es in eine Ausnehmung in einem Scheitelbereich der Mantelfläche des Kolbens eingesetzt wird. Abgesehen von der erheblich vereinfachten Montage reduzieren sich hiermit auch die Materialkosten, weil das Volumen des erforderlichen Magnetmaterials sehr gering ist. Zugleich ist das Dauermagnetstück lagesicher in der Ausnehmung fixiert, weil das Führungsband eine Doppelfunktion besitzt und neben seiner Führungsaufgabe auch noch als Halteteil fungiert, das das Dauermagnetstück in der Ausnehmung hält und zugleich abdeckt, so daß es vor Beschädigung sicher ist. Die in dem zur Fixierung des Führungsbandes auf dem Kolben dienenden Halterungsvorsprung vorhandene Aussparung sorgt in diesem Zusammenhang dafür, daß das Dauermagnetstück im eingebauten Zustand des Kolbens so nah wie möglich am Innenumfang des Zylinderraumes zu liegen kommt, wodurch der Radialabstand zum außen angeordneten Schalter bzw. Sensor zugunsten der Schaltgenauigkeit sehr klein bleibt. Und nicht zuletzt erlaubt die radial gestaffelte Anordnung von Dauermagnetstück und Führungsband die Einhaltung geringer axialer Abmessungen, was insgesamt eine kompakte Bauweise des Kolbens ermöglicht.

Vorteilhafte Weiterbildungen der Erfindung sind in den Unteransprüchen aufgeführt.

Es ist von Vorteil, wenn die Trennstelle des Führungsbandes linear und zugleich schräg mit Bezug sowohl zur Axialrichtung als auch zur Umfangsrichtung verläuft, da dies eine Vergrößerung der bei der Bemessung der Bandlänge einzuhaltenden Toleranzen erlaubt. Vorhandene Längenabweichungen können durch gegenseitiges Verschieben der Bandenden im Bereich der Trennstelle in gewissem Maße ausgeglichen werden.

Zweckmäßigerweise ist die nach außen weisende Bandfläche des Führungsbandes, welche eine im Betrieb an der Führungsfläche des Zylinderraumes entlanggleitende Gleitfläche bildet, mit mindestens einer Vertiefung zur Aufnahme eines Schmiermittels wie Fett versehen, welche vorzugsweise als Umfangsrille ausgebildet ist. Vorzugsweise sind zwei solcher Umfangsrillen vorhanden. Das Schmiermittel wird in den Vertiefungen gehalten und bei der Kolbenbewegung gleichmäßig über die Gleitfläche verteilt, so daß sich eine zuverlässige Dauerschmierung ergibt.

Als Werkstoff für das Führungsband ist insbesondere Kunststoff geeignet, wobei sich eine Werkstoffzusammensetzung aus 30 % Kohlefaser, 15 % Teflon und im übrigen Polyamid als besonders vorteilhaft herausgestellt hat.

Von Vorteil ist es ferner, die in Längsrichtung des Kolbens gemessene Breite der zur Fixierung des Führungsbandes dienenden Umfangsvertiefung größer zu wählen als die Breite des darin aufgenommenen Halterungsvorsprunges. Das Führungsband besitzt dadurch in Axialrichtung eine gewisse Bewegungsfreiheit, die eine nachgiebige Aufhängung zur Folge hat, was Verspannungen ausschließt. Diesbezüglich ist es auch von Vorteil, die Tiefe der Umfangsvertiefung größer als die Höhe des Halterungsvorsprunges des Führungsbandes zu wählen.

Bevorzugt ist der Kolben mit einem einzigen Führungsband ausgestattet, welches im Bereich der Kolben-Längsmitte angeordnet ist, so daß sich ein symmetrischer Aufbau ergibt, der beidseits des Führungsbandes auch noch die Anbringung von Dichtringen ermöglicht.

Nachfolgend wird die Erfindung anhand der beiliegenden Zeichnung näher erläutert. In dieser zeigen:

Fig. 1   einen Ausschnitt aus dem erfindungsgemäßen Kolben-Zylinder-Aggregat im Längsschnitt, wobei ein Teil des Kolbens und des Zylinders zu sehen sind,

Fig. 2   eine Draufsicht auf das erfindungsgemäße Kolbenführungsband ohne Kolben,

Fig. 3   einen Querschnitt durch einen mit dem Führungsband versehenen Kolben, der einen Schaltmagneten trägt, und

Fig. 4   einen Querschnitt durch eine besondere Ausführungsform des Kolbenführungsbandes.

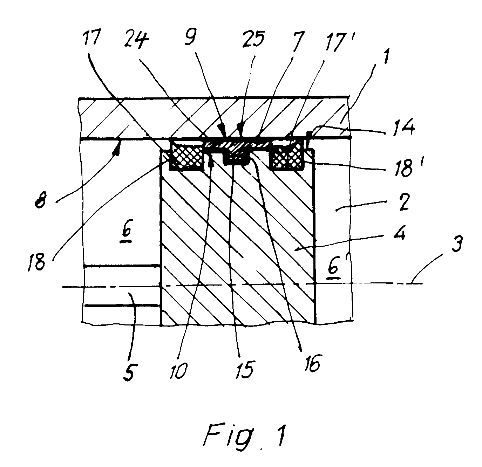

Das erfindungsgemäße Kolben-Zylinder-Aggregat enthält, wie Fig. 1 darstellt, einen Zylinder bzw.

ein Zylinderrohr 1 sowie einen von diesem umschlossenen Zylinderraum 2, in dem sich ein in Axialrichtung 3 hin- und herverschiebbarer Kolben 4 befindet. Beim Ausführungsbeispiel ist er an einer seiner axialen Seiten mit einer Kolbenstange 5 versehen. Durch wahlweise Beaufschlagung bzw. Entlüftung der beiden vom Kolben abgetrennten Druckräume 6, 6' über nicht näher dargestellte Druckmittelöffnungen kann die Bewegung des Kolbens aktiviert werden.

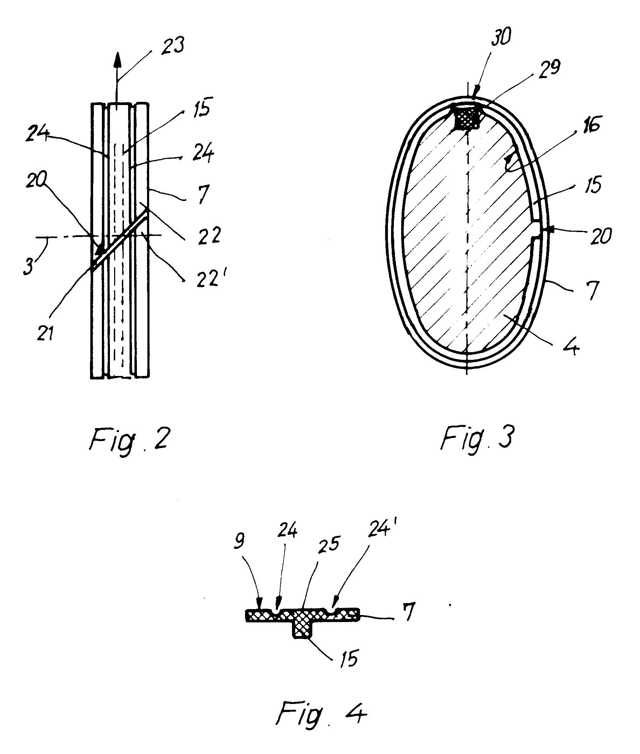

Bei seiner Verschiebebewegung wird der Kolben 4 über ein auch in den Fig. 2 bis 4 abgebildetes Führungsband 7 von der eine Führungsfläche 8 bildenden umfangsseitigen Innenoberfläche des Zylinderraums 2 geführt. Das Führungsband 7 ist in Gestalt eines Ringes geformt und erstreckt sich koaxial um den gesamten Außenumfang des Kolbens 4. Die in Radialrichtung nach außen zum Zylinder 1 hin weisende Bandfläche 9 liegt mit Gleitspiel an der Führungsfläche 8 an, während seine entgegengesetzte Innenfläche 10 sich an der der Führungsfläche 8 gegenüberliegenden Außenumfangsfläche 14 des Kolbens abstützt. Letztere liegt der Führungsfläche 8 mit Abstand gegenüber, das heißt, ohne das Führungsband betrachtet, ist der Kolben mit Radialspiel im Zylinder angeordnet. Die Befestigung des Bandes am Kolben erfolgt über einen an der Innenfläche 10 des Bandes angeformten, radial nach innen vorstehenden, umlaufenden, sich in Längsrichtung des Bandes erstreckenden Halterungsvorsprung 15 (vgl. auch Fig. 3 und 4), der in eine entsprechende nutartige Umfangsvertiefung 16 des Kolbens 4 eingreift.

Ein Kolben kann mit mehreren Führungsbändern bestückt sein oder aber mit einem einzigen Band, das sich praktisch über die gesamte Länge des Kolbens erstreckt. Besonders vorteilhaft ist jedoch die in Fig. 1 abgebildete Ausführungsform mit einem einzigen Kolbenführungsband, das sich im Bereich der Kolbenlängsmitte befindet - ebenso wie die Umfangsvertiefung 16 -, wobei es in Axialrichtung 3 gesehen beidseits jeweils von einem Dichtring 17, 17' flankiert ist. Diese Dichtringe sitzen jeweils in einer Umfangsnut 18, 18' ein, die sich in den beiden dem Führungsband benachbarten Kolbenabschnitten befinden. Die Dichtringe überbrücken dort den zwischen der Außenumfangsfläche 14 des Kolbens 4 und der Führungsfläche 8 befindlichen Spalt, der der Dicke des Führungsbandes (ohne Halterungsvorsprung) entspricht.

Das in den Figuren dargestellte Führungsband 7 besteht aus Kunststoffmaterial, wobei sich eine Zusammensetzung aus 30 % Kohlefaser, 15 % Polytetrafluoräthylen (Teflon) und dem Rest Polyamid als besonders verschleißfrei herausgestellt hat, so daß gegenüber üblichen Werkstoffverbindungen eine drei- bis fünffach höhere Lebensdauer bzw.

Standzeit erreicht werden kann. Gleichzeitig hat dieses Material gummielastische bzw. federelastische Eigenschaften, die eine bequeme Montage des Bandes auf dem Kolben ermöglichen.

So ist das Band an einer Stelle seines Umfanges mit einer Montage-Trennstelle 20 versehen, die zweckmäßigerweise, wie Fig. 2 darstellt, ein Schlitz 21 ist. Das Führungsband 7 ist also nicht in sich geschlossen, sondern ein an einer Stelle aufgetrennter Ring, wobei die beiden Ringenden 22, 22' auf Grund der federelastischen Eigenschaften praktisch nicht auseinanderklaffen. Bei der Montage wird der Ring an seinen Enden 22, 22' ein Stück weit aufgebogen, sodann über den Kolben übergezogen bis zur Stelle der Umfangsvertiefung 16, in welche der Halterungsvorsprung 15 nach dem anschließenden Loslassen der Ringenden federähnlich einschnappt. Nach dem Einschieben des mit dem Band versehenen Kolbens in den Zylinderraum 2 erfolgt automatisch die Endanpassung, indem die beiden Ringenden 22, 22' gegeneinandergepreßt werden. Dabei ist es vorteilhaft, wenn die Längsrichtung des linearen Schlitzes sowohl zur Axialrichtung 3 als auch zur Umfangsrichtung 23 schräg verläuft und insbesondere mit jeder Richtung einen Winkel von ca. 45° einschließt. Denn dann können die beiden Ringenden 22, 22' in gewissem Rahmen aneinander abgleiten und auf diese Weise ein Ausgleich von Längentoleranzen vorgenommen werden.

Eine weitere vorteilhafte Ausgestaltung des Führungsbandes ist vor allem in den Fig. 2 und 4 gut zu erkennen. So ist das Band an seiner nach außen weisenden Bandfläche mit zwei sich entlang des gesamten Bandumfanges erstreckenden Rillen 24, 24' versehen, die in axialem Abstand zueinander angeordnet sind. Sie dienen zur Aufnahme eines Schmiermittels wie Fett, das bei der Kolbenbewegung die eine Gleitfläche 25 bildende Bandfläche 9 mit einem gleichmäßigen Schmierfilm überzieht. Eine leichte Kolbenbewegung ist damit gewährleistet.

Bei einer nicht dargestellten Ausführungsform ist lediglich eine Rille zur Aufnahme des Schmiermittels vorhanden, die dann zweckmäßigerweise in der Längsmitte des Führungsbandes angeordnet ist. Im übrigen sind auch anders gestaltete Vertiefungen in der Bandfläche zur Aufnahme des Schmiermittels möglich, z. B. über den Außenumfang verteilt angeordnete Ausnehmungen.

Ein wesentlicher Vorteil des erfindungsgemäßen Kolben-Zylinder-Aggregats ist, daß der Kolben ohne besondere Oberflächenbearbeitung verwendbar ist, da seine Oberfläche nicht als Führungsfläche dient und nicht mit der Innenoberfläche des Zylinderraumes in Berührung kommt.

Bei dem Fig. 1 abgebildeten Ausführungsbeispiel ist die in Längsrichtung 3 gemessene Breite der Umfangsvertiefung 16 größer als die Breite des aufgenommenen Halterungsvorsprungs 15, so daß ein in der Zeichnung übertrieben groß dargestellter Spalt von ca. 1/10 mm besteht. Das Führungsband ist dadurch in Axialrichtung relativ gegenüber dem Kolben 4 bewegbar, so daß dieser leicht schwimmend aufgehängt ist, was ein Entstehen von Spannungen zwischen Kolben und Zylinder verhindert. Zusätzlich kann auch noch, wie dargestellt, die Tiefe der Umfangsvertiefung 16 größer sein als die Höhe des Halterungsvorsprungs 15.

Im übrigen sind der Halterungsvorsprung 15 und die mit ihm zusammenarbeitende Umfangsvertiefung 16 gegenüber den Längenabmessungen des Kolbens und den Breitenabmessungen des Bandes relativ schmal gewählt.

Das in den Figuren abgebildete Kolben-Zylinder-Aggregat ist zusätzlich mit einer Schalteinrichtung versehen, indem der Kolben einen Schaltmagneten 29 trägt (vgl. Fig. 3), der außen am Zylinder angeordnete, nicht dargestellte Schalter im Vorbeibewegen betätigen kann. Da sich die Lage des Schaltmagneten 29 nicht verändern darf, ist aus diesem Grunde der Kolben 4 und entsprechend auch der Zylinderraum 2 im Querschnitt oval bzw. ellipsenförmig ausgebildet, so daß eine Verdrehung ausgeschlossen ist. Der Schaltmagnet 29 ist ein Dauermagnetstück, das vorteilhafterweise an einem Scheitelpunkt des Kolbens 4 in dessen Außenumfangsfläche 14 eingelassen ist. Um jedoch zu gewährleisten, daß der Magnet so nahe wie möglich am Zylinderrohr ist, um die Übertragung des Magnetfeldes nicht zu beeinträchtigen, ist das den Magneten 29 abdeckende Führungsband 7 im Bereich des Magneten mit einer Aussparung 30 versehen, in die das Magnetstück eingelassen ist. Der Schaltmagnet 29 ist somit einerseits geschützt und abgedeckt untergebracht, andererseits wird die Schaltpräzision dadurch nicht beeinträchtigt.

Die Anwendung des Führungsbandes ist gerade bei Ovalkolben besonders vorteilhaft, da deren Form bei konventioneller Bauweise wesentlich schwieriger paßgenau herstellbar ist als kreisförmige Kolben.

**Patentansprüche**

1. Kolben-Zylinder-Aggregat mit einem Zylinder, in dessen Zylinderraum (2) sich ein in Axialrichtung verschiebbarer, von der umfangsseitigen Führungsfläche (8) des Zylinderraumes (2) geführter Kolben (4) befindet, der von mindestens einem koaxial angeordneten, sich über einen Längsabschnitt des Kolbens (4) erstreckenden ringförmigen Führungsband (7) umgeben ist, dessen in Radialrichtung nach außen weisende Bandfläche (9) zur Führung des Kolbens (4) an der Führungsfläche (8) des Zylinderraumes (2) mit Gleitspiel anliegt und dessen entgegengesetzte Innenfläche (10) sich an der der Führungsfläche (8) des Zylinderraumes (2) mit Abstand gegenüberliegenden Außenumfangsfläche (14) des Kolbens (4) abstützt, wobei es an einer Stelle seines Umfanges eine in dem eingebauten Zustand geschlossene Montage-Trennstelle (20) aufweist, die bei der Montage auf den Kolben (4) ein Aufbiegen des aus Material mit federelastischen Eigenschaften bestehenden Führungsbandes (7) erlaubt,
dadurch gekennzeichnet,
daß der Kolben (4) einen ovalen oder ellipsenförmigen, vom Kreisförmigen abweichenden Querschnitt besitzt und an einem seiner Scheitelpunkte eine in die Außenumfangsfläche (14) eingelassene Ausnehmung aufweist, in der ein Dauermagnetstück (29) einsitzt,
daß der Kolben (4) eine nutartige Umfangsvertiefung (16) aufweist, in die ein radial nach innen vorstehender umlaufender Halterungsvorsprung (15) des Führungsbandes (7) eingreift, um das Führungsband (7) am Kolben (4) festzulegen, und daß der Halterungsvorsprung (15) des Führungsbandes (7) an der der Ausnehmung gegenüberliegenden Stelle eine Aussparung (30) für das Dauermagnetstück (29) aufweist, welches vom Führungsband (7) abgedeckt ist.

2. Kolben-Zylinder-Aggregat nach Anspruch 1, dadurch gekennzeichnet, daß die Trennstelle (20) linear und schräg zur Axialrichtung (3) und zur Umfangsrichtung (23) verläuft und insbesondere unter einem Winkel von 45° zu beiden Richtungen (3,23) verläuft.

3. Kolben-Zylinder-Aggregat nach Anspruch 1 oder 2, dadurch gekennzeichnet, daß die eine Gleitfläche (25) bildende, nach außen weisende Bandfläche (9) des Führungsbandes (7) mindestens eine Vertiefung (24,24') zur Aufnahme von Schmiermittel aufweist.

4. Kolben-Zylinder-Aggregat nach Anspruch 3, dadurch gekennzeichnet, daß die mindestens eine Vertiefung eine sich entlang des gesamten Bandumfanges erstreckende Rille (24,24') ist, wobei zweckmäßigerweise zwei in axialem Abstand zueinander angeordnete Rillen (24,24') vorhanden sind.

5. Kolben-Zylinder-Aggregat nach einem der Ansprüche 1 bis 4, dadurch gekennzeichnet, daß das Führungsband aus Kunststoff besteht.

6. Kolben-Zylinder-Aggregat nach einem der Ansprüche 1 bis 5, dadurch gekennzeichnet, daß das Führungsband (7) aus ca. 30 % Kohlefaser, ca. 15 % Polytetrafluoräthylen (Teflon) und im übrigen im wesentlichen aus Polyamid besteht.

7. Kolben-Zylinder-Aggregat nach einem der Ansprüche 1 bis 6, dadurch gekennzeichnet, daß die in Längsrichtung (3) des Kolbens gemessene Breite der Umfangsvertiefung (16) größer ist als die Breite des Halterungsvorsprungs (15), so daß dieser mit Axialspiel von insbesondere ca. 1/10 mm in der Vertiefung (16) angeordnet ist.

8. Kolben-Zylinder-Aggregat nach einem der Ansprüche 1 bis 7, dadurch gekennzeichnet, daß die Tiefe der Umfangsvertiefung (16) größer ist als die Höhe des Halterungsvorsprungs (15).

9. Kolben-Zylinder-Aggregat nach einem der Ansprüche 1 bis 8, dadurch gekennzeichnet, daß das einzige Kolbenführungsband (7) im Bereich der Kolbenlängsmitte angeordnet ist, wobei die umfangsseitigen Außenoberflächen (14) der in Axialrichtung (3) gesehen beidseits des Bandes (7) befindlichen Kolbenabschnitte der Führungsfläche (8) des Zylinderraumes (2) mit Abstand gegenüberliegen und zweckmäßigerweise jeweils einen gegenüber der Führungsfläche abdichtenden Dichtring (17,17') tragen.

**Claims**

1. Piston-cylinder assembly with a cylinder, in the cylinder chamber (2) of which is located a piston (4), able to slide axially, guided by the periphery-side guide face (8) of the cylinder chamber (2), and surrounded by one or more coaxially-mounted annular guide bands (7) extending over a longitudinal section of the piston (4); in order to guide the piston (4), the band surface (9) facing radially outwards lies against the guide face (8) of the cylinder chamber (2) With sliding play, supporting its opposing inner face (10) on the outer peripheral face (14) of the piston (4) which lies with clearance opposite the guide face (8) of the cylinder chamber (2), and having at one point on its circumference an assembly disconnection point (20), closed in the installed state, which during fitting to the piston (4) permits bending open of the guide band (7) made of material with spring-elastic properties,
characterized in that
the piston (4) has an oval or elliptical cross-section, deviating from the circular, with a recess in the outer peripheral face (14) at one of its apexes, in which lies a permanent magnet element (29), also in that the piston (4) has a slot-shaped peripheral recess (16), in which engages a radially inwards protruding, rotating, retaining projection (15) of the guide band (7), in order to locate the guide band (7) on the piston (4),

and in that the retaining projection (15) of the guide band (7) has at the point opposite the recess a recess (30) for the permanent magnet element (29), which is covered by the guide band (7).

2. Piston-cylinder assembly according to claim 1, characterized in that the disconnection point (20) runs linearly and at an angle to the axial direction (3) and to the circumferential direction (23) and in particular runs at an angle of 45° to both directions (3, 23).

3. Piston-cylinder assembly according to claim 1 or 2, characterized in that the outwards-facing band surface (9) of the guide band (7) forming a slide surface (25) has at least one recess (24, 24') for the take-up of lubricant.

4. Piston-cylinder assembly according to claim 3, characterized in that at least one recess is a groove (24, 24') extending along the entire periphery of the band, with expediently two grooves (24, 24') spaced axially apart.

5. Piston-cylinder assembly according to any of claims 1 to 4, characterized in that the guide band is made of plastic.

6. Piston-cylinder assembly according to any of claims 1 to 5, characterized in that the guide band (7) is comprised of around 30% carbon fibre, around 15% polytetrafluroethylene (Teflon), and otherwise essentially of polyamide.

7. Piston-cylinder assembly according to any of claims 1 to 6, characterized In that the width of the peripheral recess (16) measured in the longitudinal direction (3) of the piston is greater than the width of the retaining projection (15), so that the latter is located in the recess (16) with axial play of in particular 1/10 mm.

8. Piston-cylinder assembly according to any of claims 1 to 7, characterized in that the depth of the peripheral recess (16) is greater than the height of the retaining projection (15).

9. Piston-cylinder assembly according to any of claims 1 to 8, characterized in that the sole piston guide band (7) is located in the longitudinal centre area of the piston, while the peripheral-side outer surfaces (14) of the piston sections of the guide face (8) of the cylinder chamber (2) located on either side of the band (7) viewed in the axial direction (3) lie opposite one another, with clearance, and expediently each carrying a ring gasket (17, 17') sealing against the guide face.

## Revendications

1. Bloc cylindre-piston comportant un cylindre (1) dans la chambre (2) duquel se trouve un piston (4) coulissant dans la direction axiale, guidé par la surface de guidage (8) périphérique de la chambre de cylindre (2), lequel piston est entouré par au moins une bande de guidage (7) annulaire disposée coaxialement, s'étendant sur une partie de la longueur du piston (4), dont la surface de bande (9) dirigée radialement vers l'extérieur, s'applique contre la surface de guidage (8) de la chambre de cylindre (2), avec un jeu de glissement, pour guider le piston (4) et dont la surface intérieure (10) opposée prend appui contre la surface périphérique extérieure (14) du piston (4), opposée et espacée de la surface de guidage (8) de la chambre de cylindre (2), cette bande de guidage présentant en un point de sa périphérie une zone de coupure de montage (20), fermée à l'état monté, qui permet de plier la bande de guidage (7), réalisée dans un matériau présentant des propriétés élastiques, lors du montage sur le piston (4), caractérisé en ce que le piston (4) a une section transversale de forme ovale ou elliptique, non circulaire et présente un évidement pratiqué dans la surface périphérique extérieure (14), en l'un de ses points de sommet, dans lequel est placée une pièce d'aimant permanent (29), en ce que le piston (4) présente un creux périphérique (16) en forme de rainure, dans lequel s'engage une partie saillante de fixation (15), continue, faisant saillie radialement vers l'intérieur, de la bande de guidage (7), afin de fixer celle-ci sur le piston (4) et en ce que la partie saillante de fixation (15) de la bande de guidage (7) présente, au point opposé à l'évidement, une découpe (30) pour la pièce d'aimant permanent (29) qui est recouverte par la bande de guidage (7).

2. Bloc cylindre-piston selon la revendication 1, caractérisé en ce que la zone de coupure (20) s'étend de façon rectiligne et oblique par rapport à la direction axiale (3) et par rapport à la direction périphérique (23) et notamment sous un angle de 45° par rapport à ces deux directions (3, 23).

3. Bloc cylindre-piston selon la revendication 1 ou 2, caractérisé en ce qu'une surface de bande (9) de la bande de guidage (7), formant une surface de glissement (25), dirigée vers l'extérieur, comporte au moins un creux (24, 24') destiné à recevoir un lubrifiant.

4. Bloc cylindre-piston selon la revendication 3, caractérisé en ce qu'un creux au moins est une gorge (24, 24') s'étendant le long de tout le pourtour de bande, deux gorges (24, 24') espacées axialement l'une de l'autre étant avantageusement prévues.

5. Bloc cylindre-piston selon l'une des revendications 1 à 4, caractérisé en ce que la bande de guidage est en matière plastique.

6. Bloc cylindre-piston selon l'une des revendications 1 à 5, caractérisé en ce que la bande de guidage (7) est constituée d'environ 30 % de fibres de carbone, d'environ 15 % de polytétrafluoréthylène (Téflon) et pour le reste essentiellement de polyamide.

7. Bloc cylindre-piston selon l'une des revendications 1 à 6, caractérisé en ce que la largeur du creux périphérique (16), mesurée dans la direction longitudinale (3) du piston, est supérieure à la largeur de la partie saillante de fixation (15), ce qui fait que celle-ci est placée avec un jeu axial de 1/10 de mm environ notamment, dans le creux (16).

8. Bloc cylindre-piston selon l'une des revendications 1 à 7, caractérisé en ce que la profondeur du creux périphérique (16) est supérieure à la hauteur de la partie saillante de fixation (15).

9. Bloc cylindre-piston selon l'une des revendications 1 à 8, caractérisé en ce que la seule bande de guidage de piston (7) est placée dans la région du milieu de la longueur du piston, les surfaces extérieures périphériques (14), vues en direction axiale (3), des parties de piston, se trouvant des deux côtés de la bande, étant situées en regard et à distance de la surface de guidage (8) de la chambre de cylindre (2), et étant chacune équipée avantageusement d'une bague d'étanchéité (17,17') assurant l'étanchéité par rapport à la surface de guidage.

Fig. 1

Fig. 2

Fig. 3

Fig. 4